# EUROPÄISCHE PATENTSCHRIFT

(11) **EP 3 028 557 B1**
(45) Veröffentlichungstag und Bekanntmachung des Hinweises auf die Patenterteilung: **15.11.2017**
(21) Anmeldenummer: 15194887.4
(22) Anmeldetag: 17.11.2015
(51) Int. Cl.: A01D 75/30, A01B 73/04

(54) **MÄHEINRICHTUNG UND VERFAHREN ZUM BETREIBEN EINER MÄHEINRICHTUNG**
MOWING DEVICE AND METHOD FOR OPERATING A MOWING DEVICE
FAUCHEUSE ET PROCÉDÉ DE FONCTIONNEMENT D'UNE FAUCHEUSE

(30) Priorität: 01.12.2014 DE 102014117583
(43) Veröffentlichungstag der Anmeldung: 08.06.2016
(73) Patentinhaber: CLAAS Saulgau GmbH, 88348 Bad Saulgau (DE)
(72) Erfinder: Speer, Christian, 88348 Bad Saulgau (DE)

(56) Entgegenhaltungen:
- EP-A1- 2 055 174
- EP-A2- 1 405 556
- EP-B1- 1 616 474
- GB-A- 2 505 461
- US-A1- 2012 247 078

## Beschreibung

Die Erfindung betrifft eine Mäheinrichtung zur heckseitigen Ankopplung an eine selbstfahrende Arbeitsmaschine und ein Verfahren zum Betreiben einer solchen Mäheinrichtung. GB2505461A zeigt alle Merkmale des Oberbegriffs des Anspruchs 1. EP 1 405 556 A2 offenbart ein selbstfahrendes Mähwerk zum Ernten von Grünfutter mit einer frontseitigen Mähwerkskombination, welche wenigstens zwei Mäheinheiten umfasst, die von einer Arbeits- in eine Transportstellung verschwenkbar sind, wobei der frontseitigen Mähwerkskombination wenigstens eine weitere seitlich ausladende Mäheinheit im Zwischenachsanbauraum des Trägerfahrzeugs zur Vergrößerung der Arbeitsbreite nachgeordnet ist, die über ein horizontal verlaufendes Klappgelenk, einen längenveränderbaren Ausleger und ein Kniegelenk mit vertikaler Schwenkachse an das Trägerfahrzeugs angelenkt ist. Aus EP 1 616 474 B1 ist eine Mäheinrichtung zur heckseitigen gezogenen Ankopplung an eine selbstfahrende Arbeitsmaschine bekannt. Die Mäheinrichtung weist einen länglichen Rahmen und zwei Mäheinheiten auf, die auf zwei entgegengesetzten Längsseiten des Rahmens angeordnet sind. Der Rahmen hat ein Längsende zum Ankoppeln an ein Heck der Arbeitsmaschine, so dass sich der Rahmen längs hinter der Arbeitsmaschine erstreckt. Jede der beiden Mäheinheiten umfasst einen länglichen Träger und ein balkenförmiges Mähwerk. Der Träger hat ein erstes Drehgelenk, über welches ein erstes Längsende des Trägers um eine in Längsrichtung des Rahmens und quer zu einer Längsrichtung des Trägers verlaufende erste Drehachse (d.h. eine horizontal und längs des Rahmens verlaufende Drehachse) schwenkbar an der jeweiligen Längsseite des Rahmens angelenkt ist. Das Mähwerk ist an einem dem ersten Längsende abgewandten zweiten Längsende des Trägers angelenkt, um sich in einer Arbeitsstellung der Mäheinheit längs horizontal und quer zur Längsrichtung des Rahmens zu erstrecken. Jede der beiden Mäheinheiten umfasst außerdem ein zweites Drehgelenk, welches eine quer zur ersten Drehachse und quer zur Längsrichtung des Trägers verlaufende zweite Drehachse (d.h. eine vertikal verlaufende Drehachse) für den Träger bereitstellt, um welche das Mähwerk für eine Transportstellung der Mäheinheit so verschwenkbar ist, dass es sich längs in Längsrichtung des Rahmens erstreckt.

Bei dieser Mäheinrichtung sind die ersten und zweiten Drehgelenke nahe beieinander am Rahmen angeordnet und der Träger ist einteilig ausgebildet. Wenn die Mäheinheiten aus der Arbeitsstellung, in welcher sich deren jeweiliges Mähwerk in seiner Breite und seiner Länge horizontal und längs quer zur Längsrichtung des Rahmens erstreckt, in die Transportstellung verbracht werden, so werden die folgenden Schritte ausgeführt.

Anheben des Mähwerks, indem der Träger um einen bestimmten Schwenkwinkel um die erste Drehachse nach vertikal oben geschwenkt wird; Schwenken des Trägers um etwa 90 Grad um die zweite Drehachse zu einem hinteren Längsende des Rahmens hin, das entgegengesetzt zu dem zum Ankoppeln an das Heck der Arbeitsmaschine vorgesehenen Längsende des Rahmens ist, bis sich das Mähwerk längs in Längsrichtung des Rahmens erstreckt, und Absenken des Mähwerks auf eine Auflageeinrichtung an dem hinteren Längsende des Rahmens, indem der Träger um einen bestimmten Schwenkwinkel um die erste Drehachse nach vertikal unten geschwenkt wird. Somit erstreckt sich in der Transportstellung der jeweiligen Mäheinheit deren Mähwerk in Breite und Länge horizontal und längs in Längsrichtung des Rahmens nach hinten.

Wenn eine solche gezogene Mäheinrichtung als Großflächenmäheinrichtung mit einer Arbeitsbreite von größer als 10 Metern ausgebildet ist, sollten die balkenförmigen Mähwerke von deren Mäheinheiten eine Länge von mehr als 4 Metern aufweisen. Eine Klappung solch großer Mähwerke der Länge nach in die Vertikale würde eine maximal für den Straßentransport zulässige Transporthöhe (z.B. 4 Meter) der Mäheinrichtung deutlich übersteigen. Dieses Problem wird durch die aus EP 1 616 474 B1 bekannte Mäheinrichtung gelöst, da hier in der Transportstellung die Mähwerke der Mäheinheiten um 90 Grad nach hinten geschwenkt sind.

Allerdings liegen in der Transportstellung die Mähwerke der Mäheinheiten ihrer Breite nach nebeneinander auf der Auflageeinrichtung des Rahmens auf, so dass deren jeweilige Breite einer Beschränkung unterliegt, um eine für den Straßentransport zulässige Transportbreite (z.B. 3 Meter Gesamtbreite) der Mäheinrichtung nicht zu überschreiten.

Der Erfindung liegt daher die Aufgabe zugrunde, eine wie eingangsgenannte Mäheinrichtung und ein Verfahren zum Betreiben einer solchen Mäheinrichtung bereitzustellen, womit bei einer Arbeitsbreite von größer als 10 Metern unter Einhaltung einer maximalen Transporthöhe und Transportbreite eine größere Breite der Mähwerke ermöglicht wird.

Dies wird mit einer Mäheinrichtung gemäß Anspruch 1 bzw. einem Verfahren gemäß Anspruch 10 erreicht. Weiterbildungen der erfindungsgemäßen Mäheinrichtung sind in den abhängigen Ansprüchen definiert.

Gemäß der Erfindung wird eine Mäheinrichtung zur heckseitigen Ankopplung an eine selbstfahrende Arbeitsmaschine wie einen Traktor bereitgestellt. Die Mäheinrichtung weist einen länglichen Rahmen und zwei Mäheinheiten auf, die auf zwei entgegengesetzten Längsseiten des Rahmens angeordnet bzw. angebracht sind. Der Rahmen hat ein Längsende zum Ankoppeln an ein Heck der Arbeitsmaschine, so dass sich der Rahmen längs hinter der Arbeitsmaschine erstreckt. Jede der beiden Mäheinheiten umfasst einen länglichen Träger und ein balkenförmiges Mähwerk.

Der Träger hat ein erstes Drehgelenk, über welches ein erstes Längsende des Trägers um eine in Längsrichtung des Rahmens und quer zu einer Längsrichtung des Trägers verlaufende erste Drehachse (d.h. eine horizontal und längs des Rahmens verlaufende Drehachse) schwenkbar an der jeweiligen Längsseite des Rahmens angelenkt ist. Das Mähwerk ist an einem dem ersten Längsende abgewandten zweiten Längsende des Trägers angelenkt, um sich in einer Arbeitsstellung der Mäheinheit längs horizontal und quer zur Längsrichtung des Rahmens zu erstrecken. Jede der beiden Mäheinheiten umfasst außerdem ein zweites Drehgelenk, welches eine quer zur ersten Drehachse und quer zur Längsrichtung des Trägers verlaufende zweite Drehachse (d.h. eine in Arbeitsstellung vertikal verlaufende Drehachse) für den Träger bereitstellt, um welche das Mähwerk für eine Transportstellung der Mäheinheit so verschwenkbar ist, dass es sich längs in Längsrichtung des Rahmens erstreckt.

Die erfindungsgemäße Mäheinrichtung zeichnet sich dadurch aus, dass bei jeder der beiden Mäheinheiten das zweite Drehgelenk mit vorbestimmtem Abstand vom ersten Drehgelenk zwischen erstem und zweitem Längsende des Trägers angeordnet ist, so dass der Träger von zwei über das zweite Drehgelenk miteinander verbundenen Trägerteilen gebildet ist.

Durch diese zweiteilige Ausgestaltung des Trägers und auseinandergezogene Anordnung der ersten und zweiten Drehgelenke kann, um die Mäheinheiten aus der Arbeitsstellung, in welcher sich deren jeweiliges Mähwerk in seiner Breite und seiner Länge horizontal und längs quer zur Längsrichtung des Rahmens erstreckt, in die Transportstellung zu verbringen, das Mähwerk um die zweite Drehachse so verlagert werden, dass es sich längs in Längsrichtung des Rahmens erstreckt, und außerdem um die erste Drehachse so verlagert werden, dass die Breite des Mähwerks in die Vertikale gedreht wird.

Damit sind in der Transportstellung die Mähwerke der Mäheinheiten ihrer Breite nach hochkant gestellt nebeneinander angeordnet, so dass eine Transportbreite der Mäheinrichtung in der Transportstellung durch die Summe der jeweiligen Höhen der Mähwerke bestimmt wird. Da sich die Breiten der jeweiligen Mähwerke in der Transportstellung in der Vertikalen erstrecken, wird auch bei einer Arbeitsbreite von größer als 10 Metern unter Einhaltung einer maximalen Transporthöhe und Transportbreite eine größere Breite der Mähwerke ermöglicht. Dadurch ist es möglich, in Arbeitsrichtung gesehen hinter der Mäheinrichtung Aufbereitungseinrichtungen und/oder Querfördereinrichtungen für das Erntegut anzuordnen, ohne die Transportbreite zu vergrößern. Als Aufbereitungseinrichtungen können z.B. Walzen- oder Zinkenaufbereiter und als Querfördereinrichtungen können Förderbänder vorgesehen werden.

Gemäß einer Ausführungsform der Erfindung ist bei jeder der beiden Mäheinheiten ein zwischen erstem und zweitem Drehgelenk angeordneter erster Trägerteil der beiden Trägerteile des Trägers abgewinkelt und so ausgerichtet, dass ein stumpfer Innenwinkel seiner Abwinklung dem Mähwerk zugewandt ist und sich ein am zweiten Drehgelenk angeordneter erster Schenkel des ersten Trägerteils in der Arbeitsstellung horizontal erstreckt. Somit erstreckt sich ein am ersten Drehgelenk angeordneter zweiter Schenkel des ersten Trägerteils in der Arbeitsstellung schräg nach unten, wodurch sich die erste Drehachse und damit der Schwerpunkt der Mäheinheit nach unten verlagert. Dies gibt der Mäheinrichtung mehr Seitenkippstabilität. Bevorzugt beträgt bei jeder der beiden Mäheinheiten der Innenwinkel der Abwinklung des ersten Trägerteils zwischen 110 Grad und 130 Grad.

Bevorzugt entspricht bei jeder der beiden Mäheinheiten eine Länge des ersten Schenkels des ersten Trägerteils mindestens der Hälfte einer Breite des Mähwerks. Somit kann eine Anlenkposition des Mähwerks am zweiten Längsende des Trägers etwa mittig in Bezug auf die Breite des Mähwerks vorgesehen sein, da in der Transportstellung im Wesentlichen der erste Schenkel des ersten Trägerteils über seine Länge den nötigen Abstand des Mähwerks zum ersten Drehgelenk bereitstellt. Durch die mittige Anlenkposition können die Stabilität und die Mäheigenschaften der Mäheinrichtung optimiert werden.

Gemäß einer weiteren Ausführungsform der Erfindung ist bei jeder der beiden Mäheinheiten das erste Drehgelenk so angeordnet, dass die erste Drehachse mit seitlichem Abstand von der jeweiligen Längsseite des Rahmens benachbart zu einem unteren Längsrand der Längsseite verläuft.

Durch diese Anordnung der ersten Drehachse wird ermöglicht, dass sich der zweite Schenkel des ersten Trägerteils in der Transportstellung schräg in den seitlichen Abstand von der jeweiligen Längsseite des Rahmens legen kann und damit der erste Schenkel des ersten Trägerteils in der Transportstellung weiter zum Rahmen hin schwenken kann. Damit wird einerseits in der Transportstellung die Seitenkippstabilität weiter erhöht und wird andererseits in der Transportstellung die Transportbreite reduziert.

Bevorzugt ist bei jeder der beiden Mäheinheiten der seitliche Abstand der ersten Drehachse von der jeweiligen Längsseite des Rahmens so bemessen, dass ein am ersten Drehgelenk angeordneter zweiter Schenkel des ersten Trägerteils für die Transportstellung der Mäheinheit zur anlenkenden Längsseite des Rahmens hin schwenkbar ist, bis der erste Schenkel des ersten Trägerteils längs vertikal ausgerichtet an dieser Längsseite des Rahmens anliegt.

Durch das Anliegen des ersten Schenkels des ersten Trägerteils an der anlenkenden Längsseite des Rahmens erhält der Träger in der Transportstellung vorteilhaft eine zusätzliche Abstützung bzw. Lagefixierung in Querrichtung des Rahmens, wodurch die Seitenkippstabilität weiter erhöht wird.

Gemäß noch einer Ausführungsform der Erfindung ist bei jeder der beiden Mäheinheiten das zweite Drehgelenk eingerichtet, so dass ein zwischen zweitem Drehgelenk und Mähwerk angeordneter zweiter Trägerteil der beiden Trägerteile des Trägers für die Transportstellung der Mäheinheit in Richtung zu einem dem einen Längsende des Rahmens entgegengesetzten anderen Längsende des Rahmens hin verschwenkbar ist. Somit kann das jeweilige Mähwerk für die Transportstellung vorteilhaft nach hinten verschwenkt werden.

Gemäß noch einer weiteren Ausführungsform der Erfindung ist bei jeder der beiden Mäheinheiten der zweite Trägerteil abgewinkelt ausgebildet und so ausgerichtet, dass ein stumpfer Innenwinkel seiner Abwinklung dem Mähwerk zugewandt ist und sich ein am zweiten Drehgelenk angeordneter erster Schenkel des zweiten Trägerteils in der Arbeitsstellung der Mäheinheit horizontal erstreckt. Somit erstreckt sich ein am Mähwerk angeordneter zweiter Schenkel des zweiten Trägerteils in der Arbeitsstellung schräg nach unten, wodurch das Mähwerk beim Mähen vorteilhaft nahe an den Boden gebracht wird. Außerdem stellt der zweite Schenkel des zweiten Trägerteils somit für das Verschwenken zwischen der Arbeitsstellung und der Transportstellung vorteilhaft einen Abstand zum ersten Trägerteil bereit, um eine Kollision mit diesem bzw. Reibkontakt sicher zu vermeiden.

Der Innenwinkel der Abwinklung des zweiten Trägerteils beträgt etwa zwischen 110 Grad und 130 Grad. Außerdem ist der Innenwinkel der Abwinklung des zweiten Trägerteils etwa genauso groß wie der Innenwinkel der Abwinklung des ersten Trägerteils ausgebildet.

Die Mäheinrichtung weist mindestens ein Stützrad auf, das mit Abstand zu einem Längsende am Rahmen angeordnet ist, um den Rahmen zur Bewegung in dessen Längsrichtung bodenseitig abzustützen. Gemäß den Ausführungsformen der Erfindung ist die Mäheinrichtung somit als gezogene Mäheinrichtung ausgebildet.

Durch die Erfindung wird auch ein Verfahren (Betriebsverfahren) zum Betreiben einer Mäheinrichtung gemäß einer, mehreren oder allen zuvor beschriebenen Ausführungsformen der Erfindung in jeder denkbaren Kombination bereitgestellt. Das Betriebsverfahren dient dazu, zumindest eine Mäheinheit der Mäheinrichtung aus der Arbeitsstellung, in welcher sich das Mähwerk seiner Breite und seiner Länge nach horizontal und längs quer zur Längsrichtung des Rahmens erstreckt, in die Transportstellung zu verbringen, in welcher die Breite des Mähwerks in die Vertikale gedreht ist und sich das Mähwerk längs in Längsrichtung des Rahmens erstreckt.

Das Betriebsverfahren weist zumindest die Schritte auf: Anheben des Mähwerks in eine Vorgewendestellung, indem der Träger um einen vorbestimmten ersten Teilwinkel um die erste Drehachse nach oben geschwenkt wird;
Schwenken eines zwischen zweitem Drehgelenk und Mähwerk angeordneten Trägerteils der beiden Trägerteile des Trägers um einen vorbestimmten Teil-Schwenkwinkel von etwa 30 bis 60 Winkelgraden um die zweite Drehachse zu einem Längsende des Rahmens hin, das entgegengesetzt zu dem zum Ankoppeln an das Heck der Arbeitsmaschine vorgesehenen Längsende des Rahmens ist;
Schwenken des Trägers um einen vorbestimmten zweiten Teilwinkel um die erste Drehachse nach vertikal oben, bis die Breite des Mähwerks in die Vertikale gedreht ist, und
Schwenken des zwischen zweitem Drehgelenk und Mähwerk angeordneten Trägerteils der beiden Trägerteile des Trägers um einen vorbestimmten zweiten Teil-Schwenkwinkel um die zweite Drehachse zum Längsende des Rahmens hin bis sich das Mähwerk längs in Längsrichtung des Rahmens erstreckt.

Damit können in der Transportstellung die Mähwerke der Mäheinheiten ihrer Breite nach hochkant gestellt nebeneinander angeordnet werden, so dass eine Transportbreite der Mäheinrichtung in der Transportstellung durch die Summe der jeweiligen Höhen der Mähwerke bestimmt wird. Da sich die Breiten der jeweiligen Mähwerke in der Transportstellung in der Vertikalen erstrecken, wird auch bei einer Arbeitsbreite von größer als 10 Metern unter Einhaltung einer maximalen Transporthöhe und Transportbreite eine größere Breite der Mähwerke ermöglicht.

Durch das Anheben des Mähwerks um die erste Drehachse zunächst nur bis zur Vorgewendestellung sowie das anschließende Schwenken des äußeren Trägerteils nur um einen vorbestimmten Teil-Schwenkwinkel um die zweite Drehachse kann vorteilhaft eine Kollision mit dem Rad des Fahrwerkes vermieden werden. Weiterhin nimmt der Schwerpunkt des Mähwerks dadurch eine geringere Höhe ein, so dass die Kippneigung der Mäheinrichtung geringer ist. Darüber hinaus weist der Schwerpunkt des nur teilweise nach hinten geschwenkten Mähwerks einen kürzeren Hebel gegenüber der ersten Drehachse auf, so dass für das Anheben in die vertikale Endstellung des Trägers eine kleinere Kraft aufgebracht werden muss.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren detaillierter beschrieben.
- Fig. 1: zeigt eine perspektivische Ansicht einer in einer Arbeitsstellung befindlichen Mäheinrichtung gemäß einer Ausführungsform der Erfindung.
- Fig. 2: zeigt eine Draufsicht der Mäheinrichtung von Fig. 1.
- Fig. 3: zeigt eine Vordersicht der Mäheinrichtung von Fig. 1.
- Fig. 4: zeigt eine perspektivische Ansicht der erfindungsgemäßen Mäheinrichtung, wobei sich diese in einer ersten Betriebsstellung zwischen der Arbeitsstellung und einer Transportstellung befindet.
- Fig. 5: zeigt eine perspektivische Ansicht der erfindungsgemäßen Mäheinrichtung, wobei sich diese in einer zweiten Betriebsstellung zwischen der Arbeitsstellung und der Transportstellung befindet.
- Fig. 6: zeigt eine perspektivische Ansicht der erfindungsgemäßen Mäheinrichtung, wobei sich diese in der Transportstellung befindet.
- Fig. 7: zeigt eine Seitenansicht der Mäheinrichtung von Fig. 6.
- Fig. 8: zeigt eine Vordersicht der Mäheinrichtung von Fig. 6.
- Fig. 9: zeigt eine Seitenansicht der erfindungsgemäßen Mäheinrichtung, wobei sich diese in einer modifizierten Transportstellung befindet.
- Fig. 10: zeigt eine Vordersicht der Mäheinrichtung von Fig. 9.

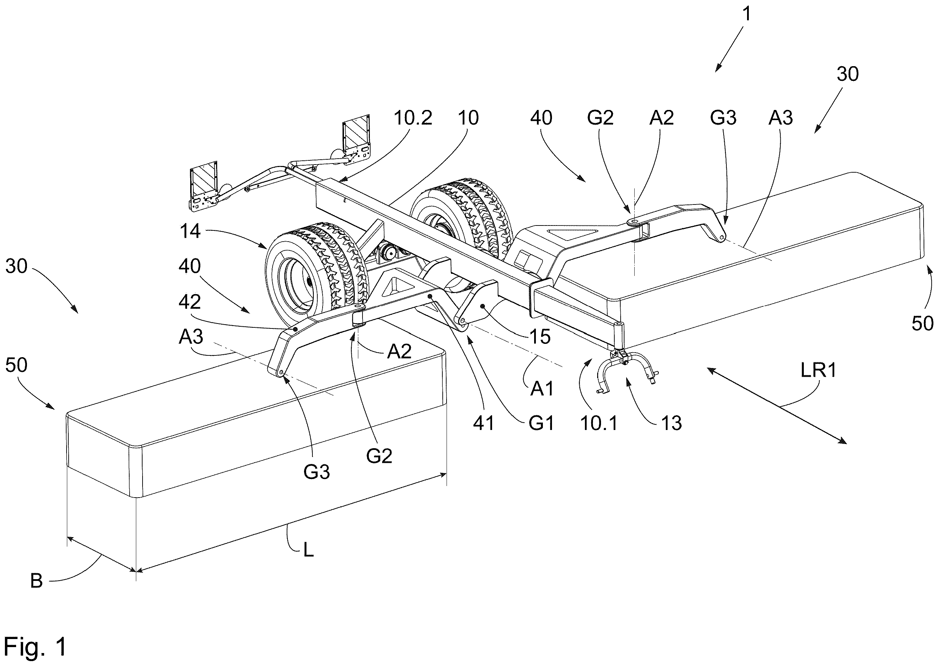

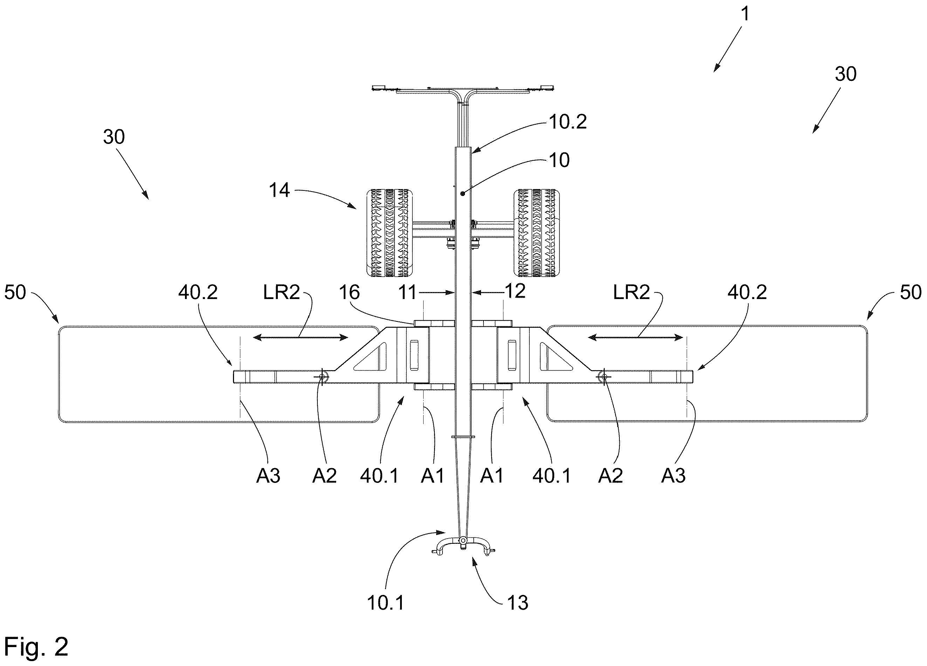

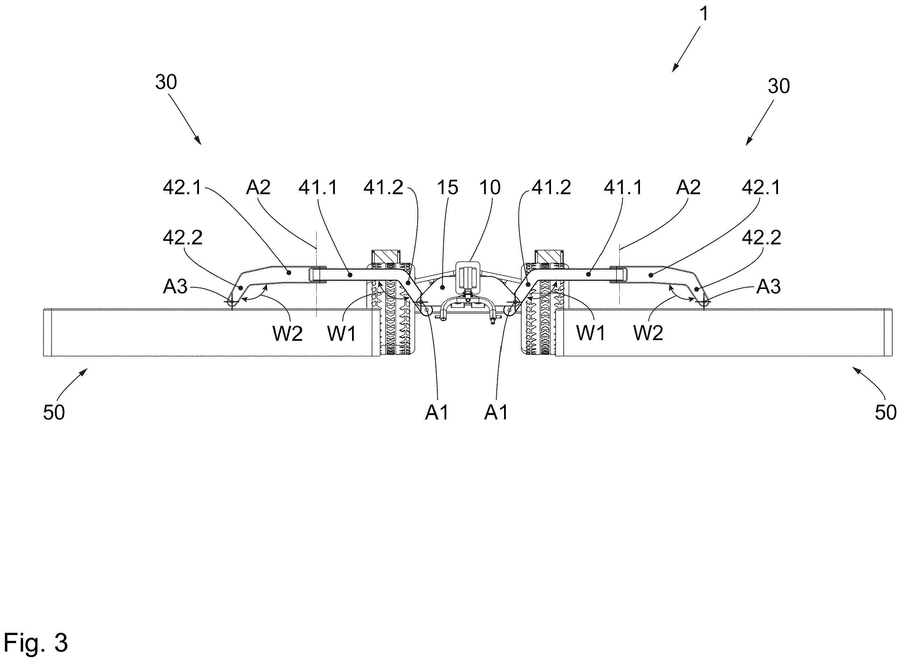

Im Folgenden werden unter Bezugnahme auf die Figuren 1 bis 10 eine Mäheinrichtung 1 zur heckseitigen Ankopplung an eine selbstfahrende Arbeitsmaschine wie einen Traktor (nicht gezeigt) sowie ein Verfahren zum Betreiben der Mäheinrichtung 1 beschrieben werden.

Die Mäheinrichtung 1 weist einen länglichen Rahmen 10 und zwei über eine Längsachse des Rahmens 10 spiegelbildlich identisch ausgebildete Mäheinheiten 30 auf, die auf zwei entgegengesetzten Längsseiten 11, 12 des Rahmens 10 in einer Linie angeordnet bzw. angebracht sind.

Ein vorderes Längsende 10.1 des Rahmens 10 ist mit einer Kupplung 13 versehen, über welche das vordere Längsende 10.1 des Rahmens 10 an ein Heck der Arbeitsmaschine angekuppelt werden kann, so dass sich der Rahmen 10 längs hinter der Arbeitsmaschine erstreckt. Mit Abstand vom vorderen Längsende 10.1 des Rahmens 10 und benachbart zu einem dem vorderen Längsende 10.1 entgegengesetzten hinteren Längsende 10.2 des Rahmens 10 ist eine Radanordnung 14 mit zwei Stützrädern (nicht separat bezeichnet) als Fahrwerk am Rahmen 10 angebracht, um den Rahmen 10 zur Bewegung in dessen Längsrichtung LR1 bodenseitig abzustützen. Gemäß der beschriebenen Ausführungsform ist die Mäheinrichtung 1 somit als gezogene Mäheinrichtung ausgebildet.

Jede der beiden Mäheinheiten 30 umfasst einen länglichen zweiteiligen Träger 40 und ein balkenförmiges Mähwerk 50 vorbestimmter Länge L und Breite B. Gemäß der beschriebenen Ausführungsform ist die Mäheinrichtung 1 als Großflächenmäheinrichtung mit einer Arbeitsbreite von größer als 10 Metern ausgebildet, womit die Länge L jedes balkenförmigen Mähwerks 50 größer als 4 Meter ist. Gemäß der beschriebenen Ausführungsform ist außerdem die Breite B jedes balkenförmigen Mähwerks 50 größer als 1,5 Meter.

Der Träger 40 jeder Mäheinheit 30 weist einen ersten Trägerteil 41 und einen zweiten Trägerteil 42 auf. Der erste Trägerteil 41 bildet ein erstes Längsende 40.1 des Trägers 40 und ist mit diesem ersten Längsende 40.1 über ein erstes Drehgelenk G1 um eine parallel zur Längsrichtung LR1 des Rahmens 10 und quer zu einer Längsrichtung LR2 des Trägers 40 verlaufende erste Drehachse A1 (d.h. eine horizontal und längs des Rahmens 10 verlaufende Drehachse) schwenkbar an der jeweiligen Längsseite 11, 12 des Rahmens 10 angelenkt.

Der zweite Trägerteil 42 bildet ein dem ersten Längsende 40.1 abgewandtes zweites Längsende 40.2 des Trägers 40 und ist über ein zweites Drehgelenk G2, welches mit vorbestimmtem Abstand vom ersten Drehgelenk G1 zwischen erstem und zweitem Längsende 40.1, 40.2 des Trägers 40 angeordnet ist, mit dem ersten Trägerteil 41 verbunden. Das zweite Drehgelenk G2 stellt eine quer zur ersten Drehachse A1 und quer zur Längsrichtung LR2 des Trägers 40 verlaufende zweite Drehachse A2 (d.h. eine in den Figuren 1 bis 3 jeweils vertikal verlaufende Drehachse) für den Träger 40 bzw. dessen zweiten Trägerteil 42 bereit.

Das Mähwerk 50 ist am durch den zweiten Trägerteil 42 definierten zweiten Längsende 40.2 des Trägers 40 über ein drittes Drehgelenk G3 schwenkbar angelenkt. Das dritte Drehgelenk G3 stellt eine parallel zur Längsrichtung LR1 des Rahmens 10 und zur ersten Drehachse A1 verlaufende dritte Drehachse A3 (d.h. eine horizontal und längs des Rahmens 10 verlaufende Drehachse) für das Mähwerk 50 bereit, um im Betrieb der Mäheinrichtung 1 eine flexible Bodenanpassung des Mähwerks 50 zu unterstützen.

Wie aus den Figuren 1 bis 3 ersichtlich, ist bei jeder der beiden Mäheinheiten 30 der zwischen erstem Drehgelenk G1 und zweitem Drehgelenk G2 angeordnete erste Trägerteil 41 des Trägers 40 abgewinkelt ausgebildet und weist einen am zweiten Drehgelenk G2 angeordneten ersten Schenkel 41.1 sowie einen dazu abgewinkelten am ersten Drehgelenk G1 angeordneten zweiten Schenkel 41.2 auf. Eine Länge des ersten Schenkels 41.1 des ersten Trägerteils 41 entspricht dabei mindestens der Hälfte der Breite B des Mähwerks 50 und ist gemäß der gezeigten Ausführungsform größer als die Hälfte der Breite B des Mähwerks 50 ausgebildet.

Die ersten und zweiten Schenkel 41.1, 41.2 des ersten Trägerteils 41 schließen mit ihrer Abwinklung einen stumpfen ersten Innenwinkel W1 miteinander ein, wobei der erste Innenwinkel W1 dem Mähwerk 50 zugewandt ist. Der erste Innenwinkel W1 der Abwinklung des ersten Trägerteils 41 beträgt zwischen 110 Grad und 130 Grad und bevorzugt etwa 120 Grad.

Wie aus den Figuren 1 bis 3 ersichtlich, ist bei jeder der beiden Mäheinheiten 30 auch der zwischen zweitem Drehgelenk G2 und drittem Drehgelenk G3 bzw. dem Mähwerk 50 angeordnete zweite Trägerteil 42 des Trägers 40 abgewinkelt ausgebildet und weist einen am zweiten Drehgelenk G2 angeordneten ersten Schenkel 42.1 sowie einen dazu abgewinkelten am dritten Drehgelenk G3 angeordneten zweiten Schenkel 42.2 auf.

Die ersten und zweiten Schenkel 42.1, 42.2 des zweiten Trägerteils 42 schließen mit ihrer Abwinklung einen stumpfen zweiten Innenwinkel W2 miteinander ein, wobei der zweite Innenwinkel W2 dem Mähwerk 50 zugewandt ist. Der zweite Innenwinkel W2 der Abwinklung des zweiten Trägerteils 42 beträgt zwischen 110 Grad und 130 Grad und bevorzugt etwa 120 Grad. Außerdem ist bevorzugt, dass der zweite Innenwinkel W2 genauso groß wie der erste Innenwinkel W1 ausgebildet ist.

Wie aus den Figuren 1 bis 3 ersichtlich, ist bei jeder der beiden Mäheinheiten 30 das erste Drehgelenk G1 so angeordnet, dass die erste Drehachse A1 mit seitlichem Abstand von der jeweiligen Längsseite 11,12 des Rahmens 10 benachbart zu einem unteren Längsrand der Längsseite 11, 12 verläuft. Zu diesem Zweck sind an eine Unterseite des Rahmens 10 zwei Lagerbrücken 15, 16 angeschweißt, wobei jede Lagerbrücke 15, 16 eine seitlich vorstehende Lagerzunge für das auf der einen Längsseite 11 des Rahmens 10 befindliche erste Drehgelenk G1 und eine seitlich vorstehende Lagerzunge für das auf der anderen Längsseite 12 des Rahmens 10 befindliche erste Drehgelenk G1 bereitstellt. Jedes erste Drehgelenk G1 weist somit zwei mit Abstand in Längsrichtung LR1 des Rahmens 10 an diesem quer zur Längsrichtung LR1 vorstehende Lagerzungen auf, zwischen denen das am zweiten Schenkel 41.2 des ersten Trägerteils 41 definierte erste Längsende 40.1 des Trägers 40 z.B. mittels eines durchgesteckten Achsteils (nicht bezeichnet) schwenkbar gelagert ist.

Die Figuren 1 bis 3 zeigen die Mäheinrichtung 1 bzw. deren zwei Mäheinheiten 30 in einer Arbeitsstellung. Wie aus den Figuren 1 bis 3 ersichtlich, erstreckt sich das Mähwerk 50 jeder Mäheinheit 30 in der Arbeitsstellung seiner Länge L und seiner Breite B nach horizontal sowie längs quer zur Längsrichtung LR1 des Rahmens 10. Außerdem erstrecken sich in der Arbeitsstellung die ersten Schenkel 41.1, 42.1 der ersten und zweiten Trägerteile 41, 42 des Trägers längs bzw. ihrer Länge nach jeweils horizontal bzw. im Wesentlichen horizontal. Außerdem erstreckt sich in der Arbeitsstellung der Träger 40 jeder der beiden Mäheinheiten 30 in gestreckter Konfiguration (d.h. nicht im zweiten Drehgelenk G2 geknickt) längs bzw. seiner Längsrichtung LR2 nach quer zur Längsrichtung LR1 des Rahmens 10.

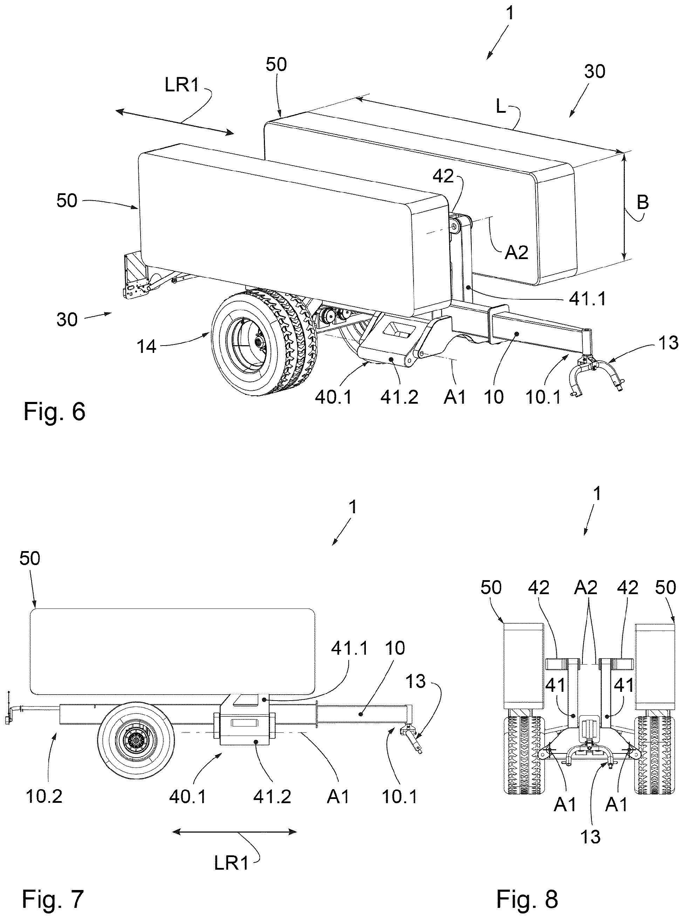

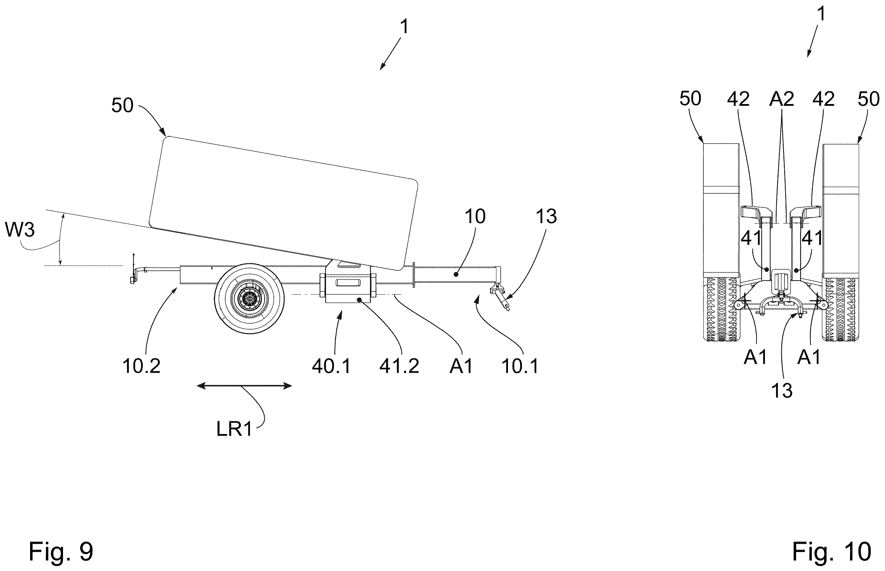

Die Figuren 6 bis 8 zeigen die Mäheinrichtung 1 bzw. deren zwei Mäheinheiten 30 in einer ersten Transportstellung, und die Figuren 9 und 10 zeigen die Mäheinrichtung 1 bzw. deren zwei Mäheinheiten 30 in einer modifizierten zweiten Transportstellung. Wie aus den Figuren 6 bis 10 ersichtlich, ist in der Transportstellung (erste bzw. zweite Transportstellung) das Mähwerk 50 jeder Mäheinheit 30 so um die zweite Drehachse A2 verschwenkt bzw. gedreht, dass sich das Mähwerk 50 seiner Länge L nach bzw. längs in Längsrichtung LR1 des Rahmens 10 erstreckt. Außerdem ist in der Transportstellung das Mähwerk 50 jeder Mäheinheit 30 um die erste Drehachse A1 so verschwenkt bzw. gekippt, dass sich das Mähwerk 50 seiner Breite B nach vertikal erstreckt bzw. die Breite B des Mähwerks 50 in die Vertikale gedreht bzw. gekippt ist.

Wie aus den Figuren 6 bis 10 außerdem ersichtlich, ist bei jeder der beiden Mäheinheiten 30 der seitliche Abstand der ersten Drehachse A1 von der jeweiligen Längsseite 11, 12 des Rahmens 10 so bemessen, dass der am ersten Drehgelenk G1 angeordnete zweite Schenkel 41.2 des ersten Trägerteils 41 in der Transportstellung zur anlenkenden Längsseite 11 bzw. 12 des Rahmens 10 hin geschwenkt ist, so dass der erste Schenkel 41.1 des ersten Trägerteils 41 längs vertikal ausgerichtet an dieser Längsseite 11 bzw. 12 des Rahmens 10 anliegt.

Wie aus den Figuren 6 bis 10 außerdem ersichtlich, ist bei jeder der beiden Mäheinheiten 30 das zweite Drehgelenk G2 z.B. mittels eines entsprechenden Anschlags (nicht dargestellt) eingerichtet, so dass der zwischen zweitem Drehgelenk G2 und Mähwerk 50 angeordnete zweite Trägerteil 42 des Trägers 40 in der Transportstellung in Richtung zum hinteren Längsende 10.2 des Rahmens 10 hin verschwenkt ist und sich seiner Länge nach bzw. längs im Wesentlichen in Längsrichtung LR1 des Rahmens 10 erstreckt.

Um die Mäheinheiten 30 bzw. deren jeweilige Mähwerke 50 aus der Arbeitsstellung in die Transportstellung zu verbringen, werden die im Folgenden beschriebenem Schritte eines erfindungsgemäßen Verfahrens (im Folgenden Betriebsverfahren genannt) zum Betreiben der Mäheinrichtung 1 für jede der Mäheinheiten 30 durchgeführt. Dabei können je nach Bedarf beide Mäheinheiten 30 gleichzeitig aus der Arbeitsstellung in die Transportstellung verbracht werden oder kann auch nur eine der Mäheinheiten 30 aus der Arbeitsstellung in die Transportstellung verbracht werden und kann die andere der Mäheinheiten 30 in ihrer jeweils gerade eingenommenen Stellung (Arbeitsstellung oder Transportstellung) verbleiben.

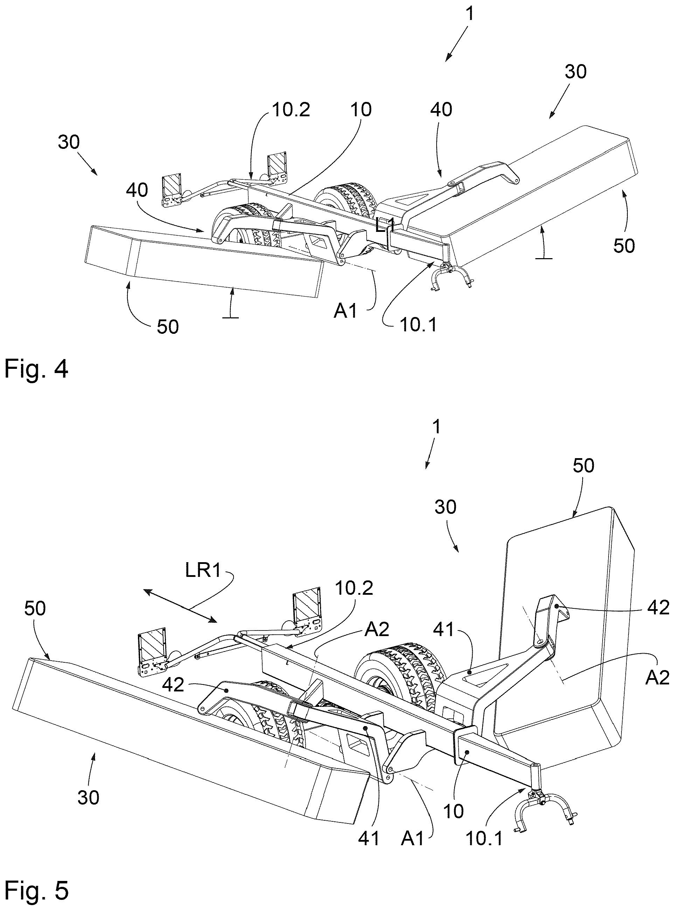

Gemäß dem Betriebsverfahren wird, um eine jeweilige Mäheinheit 30 aus der Arbeitsstellung in die Transportstellung zu verbringen, in einem ersten Schritt das jeweilige Mähwerk 50 in eine Vorgewendestellung angehoben, indem der Träger 40 in seiner gestreckten Konfiguration um einen vorbestimmten ersten Teilwinkel (z.B. etwa 15 Grad) von 90 Grad um die erste Drehachse A1 nach vertikal oben geschwenkt wird, wie in Fig. 4 gezeigt.

In einem zweiten Schritt wird der zwischen zweitem Drehgelenk G2 und Mähwerk 30 angeordnete zweite Trägerteil 42 des Trägers 40 um einen vorbestimmten Teil-Schwenkwinkel von etwa 30 bis 60 Winkelgraden um die zweite Drehachse G2 nach hinten zum hinteren Längsende 10.2 des Rahmens 10 hin geschwenkt. Vorzugsweise wird das Mähwerk so weit nach hinten geschwenkt, dass es noch einen Abstand zum Fahrwerksrad aufweist und ein Verschwenken um die erste Drehachse A1 in die vertikale Endposition des Trägers 40, ohne eine Kollision mit dem Fahrwerksrad möglich ist.

Nach Erreichen dieser Zwischenposition im zweiten Drehgelenk G2 (zweite Drehachse A2) wird zum Erreichen der Transportstellung in einem dritten Schritt der erste Trägerteil 41 des Trägers 40 bzw. der komplette Träger 40 in seiner um den vorbestimmten Schwenkwinkel im zweiten Drehgelenk G2 abgewinkelten Konfiguration um einen vorbestimmten zweiten Teilwinkel (z.B. etwa 75 Grad) von 90 Grad um die erste Drehachse A1 weiter nach vertikal oben geschwenkt, bis die Breite B des Mähwerks 50 in die Vertikale gedreht ist.

Abschließend wird das Mähwerk 30 mit dem Trägerteil 42 um die zweite Drehachse A2 um einen vorbestimmten zweiten Teil-Schwenkwinkel abgesenkt. Der Schwenkwinkel um die zweite Drehachse G2 liegt dabei bevorzugt in einem Bereich von 60 Grad bis 90 Grad (je nach Mähwerk).

Je nach Größe des Schwenkwinkels um die zweite Drehachse (60 Grad bis 90 Grad) erstreckt sich dann entweder in einer ersten Variante der Transportstellung (bei 90 Grad Schwenkwinkel) eine untere Längsseite des Mähwerks 50 etwa horizontal, wie insbesondere in Fig. 7 gezeigt, oder erstreckt sich die untere Längsseite des Mähwerks 50 in einer zweiten Variante der Transportstellung (bei einen Schwenkwinkel von weniger als 90 Grad) um einen Kippwinkel W3 (bis maximal etwa 30 Grad) aus der Horizontalen nach vertikal oben verkippt, wie insbesondere in Fig. 9 gezeigt.

Obwohl in den Figuren 1 bis 10 nicht dargestellt, ist bevorzugt am hinteren Längsende 10.2 des Rahmens 10 eine Auflageeinrichtung vorgesehen, auf welcher ein in der Transportstellung hinteres Ende der unteren Längsseite jedes Mähwerks 50 durch leichtes nach vertikal unten Schwenken um die zweite Drehachse A2 abgelegt werden kann, um das Mähwerk 50 schwingungssicher abzustützen.

Wenn eine jeweilige der Mäheinheiten 30 aus der Transportstellung in die Arbeitsstellung verbracht werden soll, so sind die obigen Schritte des Betriebsverfahrens in umgekehrter Reihenfolge auszuführen.

Im Ergebnis sind gemäß der Erfindung in der ersten oder zweiten Transportstellung die Mähwerke 50 der Mäheinheiten 30 ihrer jeweiligen Breite B nach hochkant gestellt nebeneinander angeordnet, so dass eine Transportbreite der Mäheinrichtung 1 in der Transportstellung durch die Summe der jeweilige Höhen der Mähwerke 50 bestimmt wird. Da sich die Breiten B der jeweiligen Mähwerke 50 in der Transportstellung in der Vertikalen erstrecken, wird auch bei einer Arbeitsbreite von größer als 10 Metern unter Einhaltung einer maximalen Transporthöhe und Transportbreite eine größere Breite B der Mähwerke 50 ermöglicht.

Schließlich bleibt noch zu bemerken, dass für sämtliche Bewegungen um die ersten bis dritten Drehachsen A1, A2, A3 und ggf. vorzunehmende Arretierungen nicht dargestellte Stellglieder vorgesehen sind, welche z.B. Hydraulikzylinder, Pneumatikzylinder und/oder Elektromotoren sowie ggf. geeignete Getriebeeinheiten und Federn umfassen können.

Ein wesentlicher Kern der Erfindung ist darin zu sehen, dass die Breite B der Mäheinheiten einer erfindungsgemäßen gezogenen Mäheinrichtung in der Transportstellung jeweils in die Vertikale gedreht ist und die Länge L sich im Wesentlichen jeweils längs in Längsrichtung des Rahmens erstreckt. Die Länge L kann dabei um einen Kippwinkel W3 bis etwa 30 Grad aus der Horizontalen nach oben verkippt sein.
Die Mähwerkzeuge stehen in der Transportstellung vorzugsweise nach außen und die Mähkante ist vorzugsweise nach oben ausgerichtet.

### Bezugszeichenliste

- 1: Mäheinrichtung
- 10: Rahmen
- LR1: Längsrichtung
- 10.1: Längsende
- 10.2: Längsende
- 11, 12: Längsseite
- 13: Kupplung
- 14: Radanordnung
- 15, 16: Lagerbrücke
- 30: Mäheinheit
- 40: Träger
- LR2: Längsrichtung
- 40.1: Längsende
- 40.2: Längsende
- 41: Trägerteil
- 41.1: Schenkel
- 41.2: Schenkel
- 42: Trägerteil
- 42.1: Schenkel
- 42.2: Schenkel
- 50: Mähwerk
- L: Länge
- B: Breite
- A1: Drehachse
- A2: Drehachse
- A3: Drehachse
- G1: Drehgelenk
- G2: Drehgelenk
- G3: Drehgelenk
- W1: Innenwinkel
- W2: Innenwinkel
- W3: Kippwinkel

## Patentansprüche

1. Mäheinrichtung (1) zur heckseitigen Ankopplung an eine selbstfahrende Arbeitsmaschine, wie einen Traktor, aufweisend:
einen länglichen Rahmen (10) mit einem Längsende (10.1) zum Ankoppeln an ein Heck der Arbeitsmaschine, so dass sich der Rahmen (10) längs hinter der Arbeitsmaschine erstreckt, mit
einem Fahrwerk, das mit Abstand zum einen Längsende (10.1) am Rahmen (10) angeordnet ist, um den Rahmen (10) zur Bewegung in dessen Längsrichtung (LR1) bodenseitig abzustützen, und
zwei Mäheinheiten (30, 30), die auf zwei entgegengesetzten Längsseiten (11, 12) des Rahmens (10) angeordnet sind, wobei jede Mäheinheit (30) umfasst:
einen länglichen Träger (40) mit einem ersten Drehgelenk (G1), über welches ein erstes Längsende (40.1) des Trägers (40) um eine in etwa in Längsrichtung (LR1) des Rahmens (10) und etwa quer zu einer Längsrichtung (LR2) des Trägers (40) verlaufende erste Drehachse (A1) schwenkbar an der jeweiligen Längsseite (11, 12) des Rahmens (10) angelenkt ist,
ein balkenförmiges Mähwerk (50), das an einem dem ersten Längsende (40.1) abgewandten zweiten Längsende (40.2) des Trägers (40) angelenkt ist, um sich in einer Arbeitsstellung der Mäheinheit (30) längs horizontal und quer zur Längsrichtung (LR1) des Rahmens (10) zu erstrecken, **dadurch gekennzeichnet, dass** ein zweites Drehgelenk (G2), welches eine quer zur ersten Drehachse (A1) und quer zur Längsrichtung (LR2) des Trägers (40) verlaufende zweite Drehachse (A2) für den Träger (40) bereitstellt, um welche das Mähwerk (50) für eine Transportstellung der Mäheinheit (30) so verschwenkbar ist, dass es sich längs in Längsrichtung (LR1) des Rahmens (10) erstreckt,
wobei bei jeder der beiden Mäheinheiten (30, 30) das zweite Drehgelenk (G2) mit vorbestimmtem Abstand vom ersten Drehgelenk (G1) zwischen erstem und zweitem Längsende (40.1, 40.2) des Trägers (40) angeordnet ist, so dass der Träger (40) von zwei über das zweite Drehgelenk (G2) miteinander verbundenen Trägerteilen (41, 42) gebildet ist, und **dass** bei jeder der beiden Mäheinheiten (30, 30) ein zwischen erstem und zweitem Drehgelenk (G1, G2) angeordneter erster Trägerteil (41) der beiden Trägerteile (41, 42) des Trägers (40) abgewinkelt ist und so ausgerichtet ist, dass ein stumpfer Innenwinkel (W1) seiner Abwinklung dem Mähwerk (50) zugewandt ist und sich ein am zweiten Drehgelenk (G2) angeordneter erster Schenkel (41.1) des ersten Trägerteils (41) in der Arbeitsstellung horizontal erstreckt.

2. Mäheinrichtung (1) gemäß Anspruch 1, wobei bei jeder der beiden Mäheinheiten (30, 30) eine Länge des ersten Schenkels (41.1) des ersten Trägerteils (41) mindestens der Hälfte einer Breite (B) des Mähwerks (50) entspricht.

3. Mäheinrichtung (1) gemäß Anspruch 1 oder 2, wobei bei jeder der beiden Mäheinheiten (30, 30) das erste Drehgelenk (G1) so angeordnet ist, dass die erste Drehachse (A1) mit seitlichem Abstand von der jeweiligen Längsseite (11, 12) des Rahmens (10) benachbart zu einem unteren Längsrand der Längsseite (11, 12) verläuft.

4. Mäheinrichtung (1) gemäß einem der Ansprüche 1 bis 3, wobei bei jeder der beiden Mäheinheiten (30, 30) der Innenwinkel (W1) der Abwinklung des ersten Trägerteils (41) zwischen 110 Grad und 130 Grad beträgt.

5. Mäheinrichtung (1) gemäß Anspruch 4, wobei bei jeder der beiden Mäheinheiten (30, 30) der seitliche Abstand der ersten Drehachse (A1) von der jeweiligen Längsseite (11, 12) des Rahmens (10) so bemessen ist, dass ein am ersten Drehgelenk (G1) angeordneter zweiter Schenkel (41.2) des ersten Trägerteils (41) für die Transportstellung der Mäheinheit (30) zur anlenkenden Längsseite (11, 12) des Rahmens (10) hin schwenkbar ist, bis der erste Schenkel (41.1) des ersten Trägerteils (41) längs vertikal ausgerichtet an dieser Längsseite (11, 12) des Rahmens (10) anliegt.

6. Mäheinrichtung (1) gemäß einem der Ansprüche 1 bis 5, wobei bei jeder der beiden Mäheinheiten (30, 30) das zweite Drehgelenk (G2) eingerichtet ist, so dass ein zwischen zweitem Drehgelenk (G2) und Mähwerk (50) angeordneter zweiter Trägerteil (42) der beiden Trägerteile (41, 42) des Trägers (40) für die Transportstellung der Mäheinheit (30) in Richtung zu einem dem einen Längsende (10.1) des Rahmens (10) entgegengesetzten anderen Längsende (10.2) des Rahmens (10) hin verschwenkbar ist.

7. Mäheinrichtung (1) gemäß Anspruch 6, wobei bei jeder der beiden Mäheinheiten (30, 30) der zweite Trägerteil (42) abgewinkelt ausgebildet ist und so ausgerichtet ist, dass ein stumpfer Innenwinkel (W2) seiner Abwinklung dem Mähwerk (50) zugewandt ist und sich ein am zweiten Drehgelenk (G2) angeordneter erster Schenkel (42.1) des zweiten Trägerteils (42) in der Arbeitsstellung der Mäheinheit (30) horizontal erstreckt.

8. Mäheinrichtung (1) gemäß einem der vorangehenden Ansprüche, **gekennzeichnet durch** einen mit einem Fahrwerk ausgestatteten länglichen Rahmen (10) zum Ankoppeln an ein Heck einer selbstfahrenden Arbeitsmaschine, wie einen Traktor, und zwei Mäheinheiten (30, 30), die auf zwei entgegengesetzten Längsseiten (11, 12) des Rahmens (10) angeordnet sind, und sich in einer Arbeitsstellung horizontal und mit ihrer Länge (L) quer zur Längsrichtung (LR1) sowie mit ihrer Breite (B) parallel zur Längsrichtung (LR1) des Rahmens (10) erstrecken und von der Arbeitsstellung in eine Transportstellung verlagerbar sind, wobei die Breite (B) der Mäheinheiten (30, 30) in der Transportstellung jeweils in die Vertikale verdreht ist und die Länge (L) sich dabei jeweils im Wesentlichen längs in Längsrichtung (LR1) des Rahmens erstreckt.

9. Verfahren zum Betreiben einer Mäheinrichtung (1) gemäß einem der Ansprüche 1 bis 8, um zumindest eine Mäheinheit (30) dieser aus der Arbeitsstellung, in welcher sich das Mähwerk (50) seiner Breite (B) und seiner Länge (L) nach horizontal und längs quer zur Längsrichtung (LR1) des Rahmens (10) erstreckt, in die Transportstellung zu verbringen, in welcher die Breite (B) des Mähwerks (50) in die Vertikale gedreht ist und sich das Mähwerk (50) längs in Längsrichtung (LR1) des Rahmens (10) erstreckt, wobei das Verfahren die Schritte aufweist:
Anheben des Mähwerks (50) in eine Vorgewendestellung, indem der Träger (40) um einen vorbestimmten ersten Teilwinkel um die erste Drehachse (A1) nach oben geschwenkt wird,
Schwenken eines zwischen zweitem Drehgelenk (G2) und Mähwerk (50) angeordneten Trägerteils (42) der beiden Trägerteile (41, 42) des Trägers (40) um einen vorbestimmten Teil-Schwenkwinkel um die zweite Drehachse (A2) zu einem Längsende (10.2) des Rahmens (10) hin, das entgegengesetzt zu dem zum Ankoppeln an das Heck der Arbeitsmaschine vorgesehenen Längsende (10.1) des Rahmens (10) ist,
Schwenken des Trägers (40) um einen vorbestimmten zweiten Teilwinkel um die erste Drehachse (A1) nach vertikal oben, bis die Breite (B) des Mähwerks (50) in die Vertikale gedreht ist, und
Schwenken des Mähwerks (30) mit dem Trägerteil (42) um die zweite Drehachse (A2) um einen vorbestimmten zweiten Teil-Schwenkwinkel in die Transportstellung.

## Claims

1. A mowing device (1) for coupling at the rear to a self-propelled working machine like a tractor comprising:
an elongate frame (10) having a longitudinal end (10.1) for coupling to a rear of the working machine so that the frame (10) extends longitudinally behind the working machine, with
a chassis arranged at a spacing relative to the one longitudinal end (10.1) on the frame (10) to support the frame (10) at the ground for movement in the longitudinal direction (LR1) of the frame, and
two mowing units (30, 30) arranged on opposite longitudinal sides (11, 12) of the frame (10), wherein each mowing unit (30) includes:
an elongate carrier (40) having a first pivot joint (G1) by way of which a first longitudinal end (40.1) of the carrier (40) is connected to the respective longitudinal side (11.12) of the frame (10) pivotably about a first axis of rotation (A1) extending approximately in the longitudinal direction (LR1) of the frame (10) and approximately transversely relative to a longitudinal direction (LR2) of the carrier (40),
a bar-shaped mowing mechanism (50) pivoted to a second longitudinal end (40.2) of the carrier (40), that is remote from the first longitudinal end (40.1), to extend in a working position of the mowing unit (30) longitudinally horizontally and transversely relative to the longitudinal direction (LR1) of the frame (10), **characterised in that**
there is provided a second pivot joint (G2) which provides a second axis of rotation (A2) for the carrier (40), which extends transversely relative to the first axis of rotation (A1) and transversely relative to the longitudinal direction (LR2) of the carrier (40), and about which the mowing mechanism (50) is pivotable for a transport position of the mowing unit (30) such that it extends longitudinally in the longitudinal direction (LR1) of the frame (10),
wherein in each of the two mowing units (30, 30) the second pivot joint (G2) is arranged at a predetermined spacing from the first pivot joint (G1) between the first and second longitudinal ends (40.1, 40.2) of the carrier (40) so that the carrier (40) is formed by two carrier portions (41, 42) connected together by way of the second pivot joint (G2), and that in each of the two mowing units (30, 30) a first carrier portion (41), arranged between the first and second pivot joints (G1, G2), of the two carrier portions (41, 42) of the carrier (40) is angled and is so oriented that an obtuse internal angle (W1) of its angling faces towards the mowing mechanism (50) and a first limb (41.1) of the first carrier portion (41) arranged at the second pivot joint (G2) extends horizontally in the working position.

2. A mowing device (1) according to claim 1 wherein in each of the two mowing unit (30, 30) a length of the first limb (41.1) of the first carrier portion (41) corresponds at least to half a width (B) of the mowing mechanism (50).

3. A mowing device (1) according to claim 1 or claim 2 wherein in each of the two mowing units (30, 30) the first pivot joint (G1) is so arranged that the first axis of rotation (A1) extends at a lateral spacing from the respective longitudinal side (11, 12) of the frame (10) in adjacent relationship with a lower longitudinal edge of the longitudinal side (11, 12).

4. A mowing device (1) according to one of claims 1 to 3 wherein in each of the two mowing units (30, 30) the internal angle (W1) of the angling of the first carrier portion (41) is between 110 degrees and 130 degrees.

5. A mowing device (1) according to claim 4 wherein in each of the two mowing units (30, 30) the lateral spacing of the first axis of rotation (A1) from the respective longitudinal side (11, 12) of the frame (10) is of such a size that a second limb (41.2) of the first carrier portion (41), that is arranged at the first pivot joint (G1), is pivotable for the transport position of the mowing unit (30) towards the pivoting longitudinal side (11, 12) of the frame (10) until the first limb (41.1) of the first carrier portion (41) bears against said longitudinal side (11, 12) of the frame (10) in longitudinally vertically oriented relationship.

6. A mowing device (1) according to one of claims 1 to 5 wherein in each of the two mowing units (30, 30) the second pivot joint (G2) is so arranged that a second carrier portion (42), arranged between the second pivot joint (G2) and the mowing mechanism (50), of the two carrier portions (41, 42) of the carrier (40) is pivotable in a direction towards another longitudinal end (10.2) of the frame (10), that is in opposite relationship to the one longitudinal end (10.1) of the frame (10), for the transport position of the mowing unit (30).

7. A mowing device (1) according to claim 6 wherein in each of the two mowing units (30, 30) the second carrier portion (42) is of an angled configuration and is so oriented that an obtuse internal angle (W2) or its angling faces towards the mowing mechanism (50) and a first limb (42.1) of the second carrier portion (42), that is arranged at the second pivot joint (G2), extends horizontally in the working position of the mowing unit (30).

8. A mowing device (1) according to one of the preceding claims **characterised by** an elongate frame (10) equipped with a chassis for coupling to a rear of a self-propelled working machine like a tractor, and two mowing units (30, 30) which are arranged on two oppositely disposed longitudinal sides (11, 12) of the frame (10) and in a working position extend horizontally and with their length (L) transversely relative to the longitudinal direction (LR1) and with their width (B) parallel to the longitudinal direction (LR1) of the frame (10) and are displaceable from the working position into a transport position, wherein the width (B) of the mowing units (30, 30) in the transport position is respectively turned into the vertical and in that case the length (L) respectively extends substantially longitudinally in the longitudinal direction (LR1) of the frame.

9. A method of operating a mowing device (1) according to one of claims 1 to 8 to move at least one mowing unit (30) thereof out of the working position in which the mowing mechanism (50) extends horizontally in respect of its width (B) and its length (L) and longitudinally transversely relative to the longitudinal direction (LR1) of the frame (10) into the transport position in which the width (B) of the mowing mechanism (50) is turned into the vertical and the mowing mechanism (50) extends longitudinally in the longitudinal direction (LR1) of the frame (10), wherein the method comprises the steps:
lifting the mowing mechanism (50) into a headland position by the carrier (40) being pivoted upwardly through a predetermined first partial angle about the first axis of rotation (A1),
pivoting a carrier portion (42), arranged between the second pivot joint (G2) and the mowing mechanism (50), of the two carrier portions (41, 42) of the carrier (40) through a predetermined partial pivotal angle about the second axis of rotation (A2) towards a longitudinal end (10.2) of the frame (10), which is in opposite relationship to the longitudinal end (10.1) of the frame (10), that is provided for coupling to the rear of the working machine,
pivoting the carrier (40) vertically upwardly through a predetermined second partial angle about the first axis of rotation (A1) until the width (B) of the mowing mechanism (50) is turned into the vertical, and
pivoting the mowing mechanism (30) with the carrier portion (42) about the second axis of rotation (A2) through a predetermined second partial pivotal angle into the transport position.

## Revendications

1. Équipement de fauchage (1) à atteler à l'arrière d'une machine de travail automotrice, comme un tracteur, comprenant :
un bâti allongé (10) avec une extrémité longitudinale (10.1) à atteler à un arrière de machine de travail, de sorte que le bâti (10) s'étend longitudinalement derrière la machine de travail, comprenant
un train de roulement qui est disposé sur le bâti (10) à distance de l'extrémité longitudinale (10.1) afin de supporter le bâti (10) par rapport au sol en vue d'un déplacement dans sa direction longitudinale (LR1), et
deux unités de fauchage (30, 30) qui sont disposées sur deux côtés longitudinaux (11, 12) du bâti (10), chaque unité de fauchage (30) comprenant :
un support allongé (40) avec une première articulation tournante (G1) par l'intermédiaire de laquelle une première extrémité longitudinale (40.1) du support (40) est articulée à pivotement sur le côté longitudinal correspondant (11, 12) du bâti (10) autour d'un premier axe de rotation (A1) s'étendant sensiblement dans la direction longitudinale (LR1) du bâti (10) et sensiblement transversalement à une direction longitudinale (LR2) du support (40),
une tête de fauchage (50) en forme de barre, qui est articulée sur une deuxième extrémité longitudinale (40.2) du support (40) située à l'opposé de la première extrémité longitudinale (40.1) afin de s'étendre, dans une position de travail de l'unité de fauchage (30), horizontalement dans la direction longitudinale de celui-ci et transversalement à la direction longitudinale (LR1) du bâti (10), **caractérisé en ce qu'**une deuxième articulation tournante (G2) fournissant au support (40) un deuxième axe de rotation (A2) qui s'étend transversalement au premier axe de rotation (A1) et transversalement à la direction longitudinale (LR2) du support (40) et selon lequel la tête de fauchage (50) peut pivoter pour une position de transport de l'unité de fauchage (30), de façon à s'étendre longitudinalement dans la direction longitudinale (LR1) du bâti (10), dans chacune des deux unités de fauchage (30, 30) la deuxième articulation tournante (G2) étant disposée à une distance prédéterminée de la première articulation tournante (G1) entre les première et deuxième extrémités longitudinales (40.1, 40.2) du support (40), de sorte que le support (40) est formé par deux parties de support (41, 42) reliées entre elles par l'intermédiaire de la deuxième articulation tournante (G2),
**en ce que**, pour chacune des deux unités de fauchage (30, 30), une première partie de support (41) des deux parties de support (41, 42) du support (40), disposée entre les première et deuxième articulations tournantes (G1, G2), est coudée et orientée de façon qu'un angle intérieur obtus (W1) de son coude soit tourné vers la tête de fauchage (50) et qu'une première branche (41.1), disposée sur la deuxième articulation tournante (G2) de la première partie de support (41), s'étende horizontalement dans la position de travail.

2. Équipement de fauchage (1) selon la revendication 1, pour chacune des deux unités de fauchage (30, 30) une longueur de la première branche (41.1) de la première partie de support (41) correspondant au moins à la moitié d'une largeur (B) de la tête de fauchage (50).

3. Équipement de fauchage (1) selon la revendication 1 ou 2, pour chacune des deux unités de fauchage (30, 30) la première articulation tournante (G1) étant disposée de façon que le premier axe de rotation (A1) s'étende à une distance latérale du côté longitudinal correspondant (11, 12) du bâti (10), au voisinage d'un bord longitudinal inférieur du côté longitudinal (11, 12).

4. Équipement de fauchage (1) selon une des revendications 1 à 3, pour chacune des deux unités de fauchage (30, 30) l'angle intérieur (W1) du coude de la première partie de support (A1) étant compris entre 100 degrés et 130 degrés.

5. Équipement de fauchage (1) selon la revendication 4, pour chacune des deux unités de fauchage (30, 30) la distance latérale du premier axe de rotation (A1) au côté longitudinal correspondant (11, 12) du bâti (10) étant dimensionnée de façon que, pour la position de transport de l'unité de fauchage (30), une deuxième branche (41.2), disposée sur la première articulation tournante (G1), de la première partie de support (41) puisse pivoter vers le côté longitudinal d'articulation (11, 12) du bâti (10) jusqu'à ce que la première branche (41.1) de la première partie de support (41) soit appliquée contre ce côté longitudinal (11, 12) du bâti (10) en étant orientée verticalement dans sa direction longitudinale.

6. Équipement de fauchage (1) selon une des revendications 1 à 5, pour chacune des deux unités de fauchage (30, 30) la deuxième articulation tournante (G2) étant agencée de façon qu'une deuxième partie de support (42), disposée entre la deuxième articulation tournante (G2) et la tête de fauchage (50), des deux parties de support (41, 42) du support (40) puisse pivoter, pour la position de transport de l'unité de fauchage (30) en direction d'une autre extrémité longitudinale (10.2) du bâti (10), située à l'opposé de l'extrémité longitudinale (10.1) du bâti (10).

7. Équipement de fauchage (1) selon la revendication 6, pour chacune des deux unités de fauchage (30, 30) la deuxième partie de support (42) étant conformée coudée et étant orientée de façon qu'un angle intérieur obtus (W2) de son coude soit tourné vers la tête de fauchage (50) et que, dans la position de travail de l'unité de fauchage (30), une première branche (42.1), disposée sur la deuxième articulation tournante (G2), de la deuxième partie de support (42) s'étende horizontalement.

8. Équipement de fauchage (1) selon une des revendications précédentes, **caractérisé par** un bâti allongé (10), muni d'un train de roulement, à atteler à un arrière d'une machine de travail automotrice, comme un tracteur, et par deux unités de fauchage (30, 30) qui sont disposées sur deux côtés longitudinaux opposés (11, 12) du bâti (10) et qui, dans une position de travail, s'étendent horizontalement et avec leur longueur (L) transversale à la direction longitudinale (LR1) ainsi qu'avec leur largeur (B) parallèle à la direction longitudinale (LR1) du bâti (10) et sont déplaçables d'une position de travail vers une position de transport, dans la position de transport la largeur (B) de chaque unité de fauchage (30, 30) étant pivotée à la verticale et la longueur (L) s'étendant sensiblement longitudinalement dans la direction longitudinale (LR1) du bâti.

9. Procédé pour exploiter un équipement de fauchage (1) selon une des revendications 1 à 8, afin de transférer au moins une unité de fauchage (30) de celui-ci d'une position de travail, dans laquelle la tête de fauchage (50), relativement à sa largeur (B) et à sa longueur (L), s'étend dans les directions horizontale et longitudinale transversalement à la direction longitudinale (LR1) du bâti (10), vers la position de transport, dans laquelle la largeur (B) de la tête de fauchage (50) est pivotée à la verticale et la tête de fauchage (50) s'étend longitudinalement dans la direction longitudinale (LR1) du bâti (10), le procédé comprenant les étapes consistant à :
lever la tête de fauchage (50) jusqu'à une position en tournière, le support (40) étant pivoté vers le haut selon un premier angle partiel prédéterminé autour du premier axe de rotation (A1),
pivoter une partie de support (42), disposée entre la deuxième articulation tournante (G2) et la tête de fauchage (50), des deux parties de support (41, 42) du support (40) selon un angle de pivotement partiel prédéterminé autour du deuxième axe de rotation (A2) vers une extrémité longitudinale (10.2) du bâti (10), laquelle est opposée à extrémité longitudinale (10.1) du bâti (10) prévue pour l'attelage à l'arrière de la machine de travail,
pivoter le support (40) selon un deuxième angle partiel prédéterminé autour du premier axe de rotation (A1) vers la verticale et vers le haut jusqu'à ce que la largeur (B) de la tête de fauchage (50) soit pivotée à la verticale, et
pivoter la tête de fauchage (30) avec la partie de support (42) autour du deuxième axe de rotation (A2) selon un deuxième angle de pivotement partiel prédéterminé jusqu'à la position de transport.
